# EUROPEAN PATENT SPECIFICATION

(11) **EP 1 901 383 B1**
(45) Date of publication and mention of the grant of the patent: **07.01.2015**
(21) Application number: 07103172.8
(22) Date of filing: 27.02.2007
(51) Int. Cl.: H01M 8/10, H01M 8/04

(54) **Fuel cell having actuator controlling unit and method of operating the same**
Brennstoffzelle mit Aktuator-Steuereinheit zur Regelung der Brennstoffzufuhr und zugehöriges Betriebsverfahren
Pile à combustible ayant une unité de commande d'actionneur pour la régulation de l'alimentation en combustible et son procédé

(30) Priority: 13.09.2006 KR 20060088693
(43) Date of publication of application: 19.03.2008
(73) Proprietor: Samsung SDI Co., Ltd., Suwon-si, Gyeonggi-do (KR)
(72) Inventor: Kang, Sang-kyun, c/o Samsung Advanced Institute of Technology, Yongin-si, Gyeonggi-do (KR); Lee, Jae-yong, c/o Samsung Advanced Institute of Technology, Yongin-si, Gyeonggi-do (KR)
(74) Representative: Greene, Simon Kenneth

(56) References cited:
- WO-A-2005/045975
- WO-A-2005/099007
- US-A1- 2005 115 312

## Description

### BACKGROUND OF THE INVENTION

The present invention relates to a fuel cell, and more particularly, to a fuel cell having an actuator control unit and a method of operating the same.

A fuel cell system is an apparatus generating energy using fuel such as methanol. The fuel cell system includes a fuel cell, that is, an electricity generation portion generating electric energy by reacting hydrogen in the fuel and oxygen in the air, and a cartridge, that is, a fuel tank, supplying the fuel to the fuel cell.

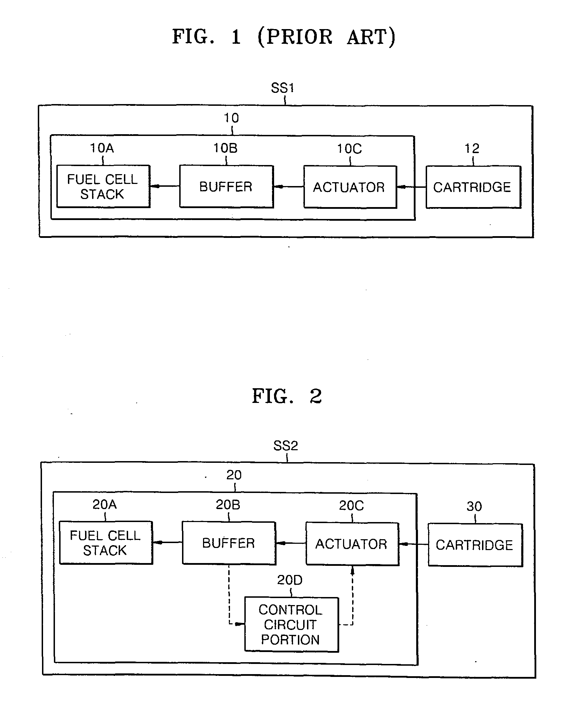

FIG. 1 illustrates the structure of a conventional fuel cell system SS1. Referring to FIG. 1, a fuel cell 10 includes a fuel cell stack 10A, a buffer 10B, and an actuator 10C. The fuel cell stack 10A is a portion where electricity is generated and includes a plurality of unit cells. The actuator 10C delivers fuel from the cartridge 12 to the buffer 10B. When the cartridge 12 which supplies fuel to the actuator 10C is regarded as primary fuel storage of the fuel cell system SS1, the buffer 10B can be secondary fuel storage. The buffer 10B stores the fuel supplied by the actuator 10C and supplies the fuel as much as the fuel cell stack 10A needs. Since the amount of instantaneous use by a load using the fuel cell system SS1 as power source is variable, the amount of fuel consumed by the fuel cell stack 10A varies accordingly. The buffer 10B supplies the fuel to the fuel cell stack 10A corresponding to the amount of fuel consumption by the fuel cell stack 10A which varies at each moment.

The fuel amount consumed by the fuel cell stack 10A can be greater than the amount of fuel supplied from the actuator 10C to the buffer 10B. In other words, the amount of fuel output from the buffer 10B can be greater than the amount of fuel input to the buffer 10B. Since the buffer 10B is used as the secondary fuel storage, it cannot be problematic even when a case in which the amount of fuel output from the buffer 10B is greater than the amount of fuel input to the buffer 108 occurs once or twice.

However, when the above case occurs continuously, even when the buffer 10B is regarded as the secondary fuel storage, it may be difficult that a necessary amount of fuel is supplied from the buffer 10B to the fuel cell stack 10A. In the end, a phenomenon that fuel is completely dried up in a portion of the buffer 10B may occur.

In the opposite case, the amount of fuel consumed by the fuel cell stack 10A can be less than the amount of fuel input to the buffer 10B. Only if such a case is not continuous, it will not be a problem because the buffer 10B has a fuel storage capacity. Also, even when the case is continuous, if the buffer 10B is not completely filled with fuel, it will not be a serious problem. However, when the buffer 10B is completely filled with fuel, the amount of fuel input from the actuator 10C to the buffer 10B is supplied to the fuel cell stack 10A as it is. Thus, the fuel is excessively supplied to the fuel cell stack 10A.

When the fuel cell system SS1 is in an off state, the fuel remaining in the fuel cell stack 10A continuously reacts. As a result, the performance of the fuel cell stack 10a can be degraded. Furthermore, when the fuel cell system is turned off in a state in which the fuel cell stack 10A is excessively filled with fuel, the degradation of performance of the fuel cell stack 10A can be more serious. This leads to a lower fuel utilization.

International Patent Application Publication Number WO 2005/045975 A1 presents a fuel cartridge which is constructed so as to be removably mountable to a fuel cell body.

United States Patent Application Publication Number US 2007/0072023 A1 discloses a fuel cell unit for connection to an information processing apparatus.

### SUMMARY OF THE INVENTION

To solve the above and/or other problems, the present invention provides a fuel cell which can supply an appropriate amount of fuel needed by a fuel cell stack and simultaneously prevent a buffer from being dried.

Also, the present invention provides an operation method of the above fuel cell.

According to an aspect of the present invention, there is provided a fuel cell according to claim 1.

The fuel cell stack may be any one of a monopolar stack and a bipolar stack.

The predetermined physical amount may be resistance.

The buffer may comprise a fuel storage medium capable of uniformly storing fuel in an entire area thereof regardless of a position of the fuel cell.

The buffer may have any one of a plate shape, a box shape, and a cylindrical shape.

According to another aspect of the present invention, there is provided a method of operating a fuel cell according to claim 4.

The predetermined physical amount may be measured using a control circuit portion.

The comparing of the measured predetermined physical amount may be performed using a control circuit portion.

The operating of the actuator may be controlled using a control circuit portion.

The predetermined physical amount may be any one of resistance and current.

The reference value may be a measured physical amount when the buffer is filled with a predetermined amount of fuel.

The operating of the actuator may comprise turning on the actuator for a given time when the predetermined physical amount is greater than the reference value.

The operating of the actuator may comprise turning off the actuator for a given time when the predetermined physical amount is not greater than the reference value.

The turning on the actuator may comprise repeating the measuring of the predetermined physical amount of the buffer and the comparing of the measured predetermined physical amount.

The turning off the actuator may comprise repeating the measuring of the predetermined physical amount of the buffer and the comparing of the measured predetermined physical amount.

### BRIEF DESCRIPTION OF THE DRAWINGS

The above and other features and advantages of the present invention will become more apparent by describing in detail preferred embodiments thereof with reference to the attached drawings in which:
FIG. 1 illustrates the structure of the conventional fuel cell system;
FIG. 2 illustrates the structure of a fuel cell system according to an embodiment of the present invention;
FIG. 3 illustrates the operational relationship among a buffer, an actuator, and a control circuit portion of the fuel cell of FIG. 2;
FIG. 4 is a sectional view showing a case in which an electrode attached to the buffer of FIG. 3 is provided at another position of the buffer; and
FIG. 5 is a flowchart showing an operational method among the buffer, the actuator, and the control circuit portion of the fuel cell of FIG. 2.

### DETAILED DESCRIPTION OF THE INVENTION

A fuel cell having an actuator controlling unit according to an embodiment of the present invention and an operation method thereof are described below with reference to the accompanying drawings. In the drawings, the thicknesses of layers and regions are exaggerated for clarity.

FIG. 2 illustrates the structure of a fuel cell system according to an embodiment of the present invention. Referring to FIG. 2, a fuel cell system SS2 according to an embodiment of the present invention includes a fuel cell 20 and a cartridge 30. The fuel cell 20 generates electrical energy using fuel. The cartridge 30 stores fuel that is supplied to the fuel cell 20. When the cartridge 30 is installed at the fuel cell 20, the fuel is supplied to the fuel cell 20 through a valve (not shown). The fuel cell 20 includes a fuel cell stack 20A where a plurality of unit cells are stacked in form of monopolar stack or bipolar stack. The monopolar stack has one planar membrane and the plurality of unit cells arranged of the planar membrane. The bipolar stack have the plurality of unit cells stacked vertically. The fuel cell 20 includes a buffer 20B, that is secondary fuel storage, an actuator 20C, and a control circuit portion 20D. Here, the cartridge 30 may be regarded as primary fuel storage. The actuator 20C delivers the fuel in the cartridge 30 to the buffer 20B, or cuts the delivery, according to the control by the control circuit portion 20D. The buffer 20B stores the fuel delivered by the actuator 20C and supplies an appropriate amount of fuel to the fuel cell stack 20A as much as the amount of fuel consumed in the fuel cell stack 20A. The control circuit portion 20D as a logic circuit controls the operation of the actuator 20C. The control circuit portion 20D uses a physical parameter value as a value for controlling the actuator 20C. In the system of Figure 1, the physical parameter value used by the control circuit portion 20D is an electric resistance value (hereinafter, referred to as the resistance).

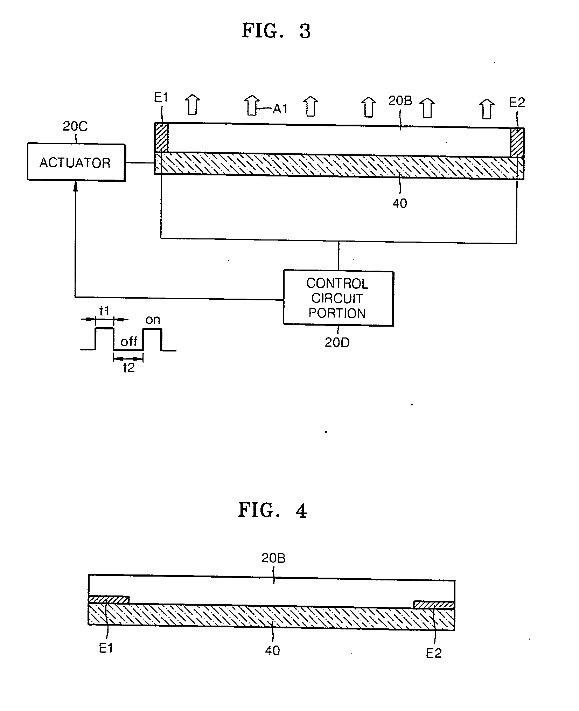

To measure the resistance of the buffer 20B, electrodes E1 and E2 can be attached at both ends of the buffer 20B as shown in FIG. 3. When the buffer 20B includes an insulation case and a fuel storage medium, for example, a porous material, provided in the case, the electrodes E1 and E2 are provided to contact the fuel storage medium. Also, when the buffer 20B is an insulation case and the case is filled with fuel, the electrodes E1 and E2 can be provided in the case to contact the fuel. The buffer 20B may have any one of a plate shape, a box shape, and a cylindrical shape.

To measure the resistance of the buffer 20B, the control circuit portion 20D applies a predetermined voltage to the buffer 20B through the electrodes E1 and E2 and measures current flowing in the buffer 20B. The control circuit portion 20D calculates the resistance of the buffer 20B using the voltage applied to the buffer 20B and the measured current. Although the current and resistance of the buffer 20B is actually those of the fuel storage medium containing fuel or fuel in the insulation case, they are referred to as the current and resistance of the buffer 20B for the convenience of explanation.

The resistance of the buffer 20B varies according to the amount of fuel existing in the buffer 20B. For example, when no fuel remains in the buffer 20B, the resistance of the buffer 20B is much higher than that when the fuel remains in the buffer 20B. When the fuel remains in the buffer 20B, the resistance of the buffer 20B decreases as the amount of the fuel increases. Thus, when the fuel remains in the buffer 20B as much as an amount of fuel consumed in the fuel storage stack 20A can be smoothly supplied, for example, an amount of fuel corresponding to the half, or for example 1/3, of the internal volume of the buffer 20B, remains in the buffer 20B, the resistance of the buffer 20B at that moment is set to a reference resistance value (hereinafter, referred to as the reference resistance).

A fact that the resistance of the buffer 20B is greater than the reference resistance signifies that the volume of the fuel distributed in the buffer 20B is less than the half of the internal volume of the buffer 20B. Thus, the control circuit portion 20D operates the actuator 20C until the resistance of the buffer 20B goes below the reference resistance. When the resistance of the buffer 20b is less than the reference resistance, which signifies that the amount of fuel distributed in the buffer 20B is more than half of the internal volume of the buffer 20B, the control circuit portion 20D stops the operation of the actuator 20C.

When the electrical resistance of the buffer 20B changes, the current of the buffer 20B changes accordingly. Thus, the operation of the actuator 20C can be controlled using the current of the buffer 20B as a control value instead of the resistance of the buffer 20B.

FIG. 3 illustrates the operational relationship among the buffer 20B, the actuator 20C, and the control circuit portion 20D of the fuel cell of FIG. 2. In FIG. 3, a block arrow A1 indicates the fuel supplied from the buffer 20B to the fuel cell stack 20A.

Referring to FIG. 3, when the resistance of the buffer 20B is greater than the reference resistance, a predetermined operational signal is applied from the control circuit portion 20D to the actuator 20C. The actuator 20C is turned on and supplies the fuel to the buffer 20B according to the operational signal. The fuel supplied by the actuator 20C is supplied to the buffer 20b through a fuel diffusion plate 40 attached on the bottom of the buffer 20B. The fuel supplied by the actuator 20C can be simultaneously supplied throughout the entire area of the bottom surface of the buffer 20B owing to the fuel diffusion plate 40. The operational signal can be applied for the first time period t1. After the operational signal is applied, the actuator 20C is tuned off for the second time period t2 until the fuel supplied to the buffer 20B is uniformly distributed in the entire volume of the buffer 20B. The control circuit portion 20D measures the resistance of the buffer 20B during the second time t2. When the resistance of the buffer 20B is still greater than the reference resistance, the control circuit portion 20D transmits the turn on signal to the actuator 20C after the second time t2 to operate the actuator 20C again. However, when the resistance of the buffer 20B is lower than or equal to the reference resistance after the second time t2, the control circuit portion 20D continuously maintains the actuator 20C in an off state until the resistance of the buffer 20B is greater than the reference resistance.

Preferably, the first time t1 is set to be shorter than the second time t2 to prevent a problem due to excessive fuel supply. However, there may be an exception. The sum (t1 +t2) of the first time t1 and the second time t2 is a cycle of the operational signal that the control circuit portion 20D supplies to the actuator 20C to control the actuator 20C. The cycle may be, for example, 10 seconds. When the cycle is about 10 seconds, the first time t1 is about 3-5 seconds while the second time t2 is about 5-7 seconds. The cyclic time (t1+t2) can be greater than or less than 10 seconds depending on the resistance of the buffer 20B.

The electrodes E1 and E2 attached at both ends of the buffer 20B can be attached at both ends of a bottom surface of the buffer 20B as shown in FIG. 4. Also, the buffer 20B can be a porous material. The size of a hole of the porous material is preferably, for example, in units of microns, so that the fuel supplied to the buffer 20B can be uniformly distributed in the buffer 20B regardless of the environment where the fuel cell is in use. The buffer 20B may have a variety of shapes.

Also, when a valve (not shown) is additionally provided between the actuator 20C and the fuel diffusion plate 40 to regulate the flow of fuel therebetween, the control circuit portion 20D can directly control the value with the same principle as that for controlling the actuator 20C.

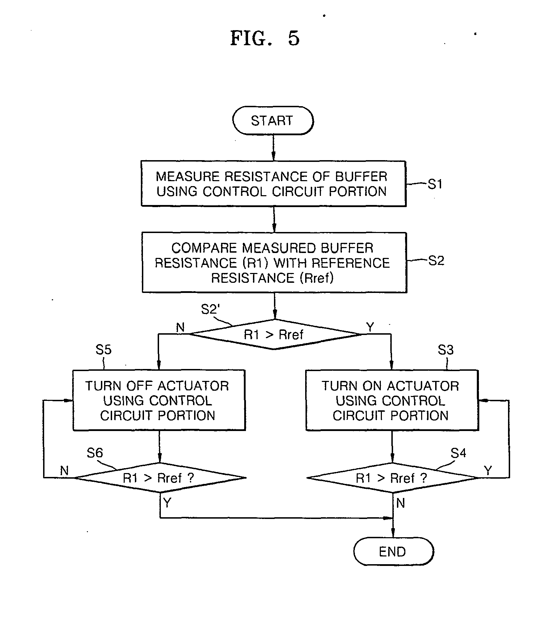

The operation method of a fuel cell according to the present invention configured as above will be described below. FIG. 5 is a flowchart showing an operational method among the buffer 20B, the actuator 20C, and the control circuit portion 20D of the fuel cell of FIG. 2. Referring to FIGS. 3 and 5, in the operation method of the present invention, first, a resistance R1 of the buffer 20B is measured using the control circuit portion 20D (S1). The measured resistance R1 of the buffer 20B is compared with a reference resistance Rref that is previously input to the control circuit portion 20D, and whether the R1 is greater than the Rref is determined (S2 and S2').

When the R1 is determined to be greater than the Rref in the S2 and S2' (R1>Rref) (Y), the control circuit portion 20D applies an operational signal to the actuator 20C for a predetermined time to operate the actuator 20C (S3). Then, the R1 is compared with the Rref to determine which one is greater (S4). When the R1 is still greater than the Rref (Y), the S3 is repeated.

Meanwhile, when the R1 is not greater than the Rref in the S2 and S2' (N), that is, the R1 is equal to or less than the Rref, the control circuit portion 20D stops the operation of the actuator 20C (S5). Then, the R1 is compared with the Rref to determine which one is greater (S6). When the R1 is still not greater than the Rref (N), the S5 is repeated. The non-operational state of the actuator 20C continues until the R1 becomes greater than the Rref.

In the S3, the operational signal applied to the actuator 20C can be applied for the first time period t1 described with reference to FIG. 3. Also, the non-operational state of the actuator 20C can be maintained for the second time period t2 described with reference to FIG. 3.

In the above operation method, other physical parameters or physical amounts of the buffer can be used. For example, instead of measuring the resistance of the buffer 20B, current may be measured and the measured current can be compared with a reference current.

While this invention has been particularly shown and described with reference to preferred embodiments thereof, it will be understood by those skilled in the art that various changes in form and details may be made therein without departing from scope of the invention as defined by the appended claims. For example, those skilled in the art to which the present invention pertains can modify the constituent elements of the fuel cell system, for example, the structure of the actuator or the cartridge, while maintaining the technical concept of the present invention as it is. Also, in FIG. 3, the buffer 20B can be divided into two or more and, if necessary, the fuel diffusion plate 40 can be divided into the same number.

As described above, the fuel cell according to the present invention includes the control circuit portion which measures the resistance of a buffer, compares the measured resistance with a reference resistance, and controls the operation of the actuator. Thus, according to the present invention, by appropriately setting the reference resistance, the amount of fuel supplied from the buffer to the fuel cell stack can be regularly controlled within a given range. When the fuel cell is to be turned off, the fuel cell can be operated to reduce the amount of fuel remaining in the buffer to a particular level.

Since the amount of fuel supplied from the buffer to the fuel cell stack can be regularly controlled within a given range, the output of the fuel cell can be stably maintained in the given range. Also, the fuel dried-up phenomenon and the excessive supply of the fuel to the fuel cell stack can be prevented.

Furthermore, when the fuel cell is in the off state, since the amount of fuel remaining in the buffer can be reduced to a particular level, the degradation of performance of the fuel cell stack due to the reaction by the fuel remaining in the fuel cell can be prevented while increasing a fuel use efficiency.

## Claims

1. A fuel cell including a fuel cell stack (20A), an actuator (20C) and a buffer (20B) adapted to store fuel delivered from the actuator (20C), comprising a control circuit portion (20D) adapted to control an operation of the actuator (20C) according to a value of a physical parameter depending on variation of an amount of fuel of the buffer,
and **characterized in that** the control circuit portion (20D) is further adapted to control an amount of fuel in the buffer (20B) so that the amount of fuel in the buffer when the fuel cell is in an off state is less than the amount of fuel in the buffer when the fuel cell is in an on state,
and **in that** the buffer is further adapted to supply as much fuel as expended in the fuel cell stack to the fuel cell stack.

2. The fuel cell of claim 1, wherein the physical parameter is electrical resistance.

3. The fuel cell of claim 1 or 2, wherein the buffer (20B) has any one of a plate shape, a box shape, and a cylindrical shape.

4. A method of operating a fuel cell including a fuel cell stack (20A), an actuator (20C) and a buffer (20B) adapted to store fuel delivered from the actuator (20C), the method comprising:
measuring a physical parameter amount depending on variation of an amount of fuel of the buffer;
comparing the measured physical parameter with a reference value; and
operating the actuator (20C) according to a result of the comparison,
and **characterized by** the steps of: setting a value of the reference value to have a value when the fuel cell is in an off state which is different from a value of the reference value when the fuel cell is in an on state so that the amount of fuel stored in the buffer when the fuel cell is in an off state is less than the amount of fuel stored in the buffer when the fuel cell is in an on state; and
supplying as much fuel as expended in the fuel cell stack to the fuel cell stack.

5. The method of claim 4, wherein the comparing of the measured physical parameter is performed using a control circuit portion (20D).

6. The method of claim 4 or 5, wherein the operating of the actuator (20C) is controlled using a control circuit portion (20D).

7. The method of any of claims 4 to 6, wherein the predetermined physical parameter is any one of electrical resistance and current.

8. The method of any of claims 4 to 7, wherein the reference value is a measured physical parameter of the buffer (20B) when the buffer (20B) is filled with a predetermined amount of fuel.

9. The method of any of claims 4 to 8, wherein the operating of the actuator (20C) comprises turning on the actuator for a given time when the physical parameter is greater than the reference value.

10. The method of any of claims 4 to 9, wherein the operating of the actuator (20C) comprises turning off the actuator for a given time when the physical parameter is not greater than the reference value.

11. The method of claim 9, wherein the turning on the actuator comprises repeating the measuring of the physical parameter of the buffer (20B) and the comparing of the measured physical parameter.

12. The method of claim 10, wherein the turning off the actuator comprises repeating the measuring of the physical parameter of the buffer (20B) and the comparing of the measured physical parameter.

## Patentansprüche

1. Eine Brennstoffzelle, die einen Brennstoffzellenstapel (20A), einen Aktuator (20C) und einen Puffer (20B) einschließt und der Speicherung von Brennstoff, der vom Aktuator (20C) geliefert wird, dient, bestehend aus einem Steuerkreisteil (20D), der die Funktion des Aktuators (20C) gemäß eines physikalischen Parameterwertes steuert, abhängig von der Veränderung der Brennstoffmenge im Puffer,
und dadurch charakterisiert, dass der Steuerkreisteil (20D) darüberhinaus die Brennstoffmenge im Puffer (20B) steuert, damit die Brennstoffmenge im Puffer bei ausgeschalteter Brennstoffzelle geringer ist als die Brennstoffmenge im Puffer bei eingeschalteter Brennstoffzelle,
und dadurch, dass der Puffer darüberhinaus so viel Brennstoff liefert wie von Brennstoffstapel zu Brennstoffstapel verbraucht wird.

2. Die Brennstoffzelle in Anspruch 1, wobei der physikalische Parameter der elektrische Widerstand ist.

3. Die Brennstoffzelle in Anspruch 1 oder 2, wobei der Puffer (20B) eine Tellerform, eine Kastenform oder eine Zylinderform aufweist.

4. Eine Methode zum Betrieb einer Brennstoffzelle, die einen Brennstoffzellenstapel (20A), einen Aktuator (20C) und einen Puffer (20B) einschließt und der Speicherung von Brennstoff dient, der vom Aktuator (20C) geliefert wird, die Methode besteht aus:
Messen eines physikalischen Parameters, der Betrag ist abhängig von der Veränderung der Brennstoffmenge im Puffer;
Vergleich des gemessenen physikalischen Parameters mit einem Referenzwert; und Betätigung des Aktuators (20C) gemäß des Vergleichsresultates,
und charakterisiert durch folgende Schritte: Einstellen eines Referenzwertes, um einen Wert zu haben, wenn die Brennstoffzelle ausgeschaltet ist, und der sich von em Referenzwert unterscheidet, wenn die Brennstoffzelle eingeschaltet ist, so dass die Brennstoffmenge, die im Puffer gespeichert ist, wenn die Brennstoffzelle ausgeschaltet ist, geringer ist als die Brennstoffmenge, die im Puffer gespeichert ist, wenn die Brennstoffzelle eingeschaltet ist; und
Lieferung von so viel Brennstoff, wie von Brennstoffstapel zu Brennstoffstapel verbraucht wird.

5. Die Methode in Anspruch 4, wobei der Vergleich des gemessenen physikalischen Parameters unter Verwendung des Steuerkreisteiles (20D) ausgeführt wird.

6. Die Methode in Anspruch 4 oder 5, wobei der Betrieb des Aktuators 10 (20C) vom Steuerkreisteil (20D) gesteuert wird.

7. Die Methode in einem der Ansprüche 4 bis 6, wobei der voreingestellte physikalische Parameter der elektrische Widerstand oder der elektrische Strom ist.

8. Die Methode eines der Ansprüche 4 bis 7, wobei der Referenzwert ein gemessener physikalischer Parameter des Puffers (20B) ist, wenn der Puffer (20B) mit einer voreingestellten Brennstoffmenge gefüllt ist.

9. Die Methode in einem der Ansprüche 4 bis 8, wobei der Betrieb des Aktuators (20C) das Einschalten des Aktuators für eine gegebene Zeit umfasst, wenn der physikalische Parameter größer als der Referenzwert ist.

10. Die Methode in einem der Ansprüche 4 bis 9, wobei der Betrieb des Aktuators (20C) das Ausschalten des Aktuators für eine gegebene Zeit umfasst, wenn der 25 physikalische Parameter nicht größer als der Referenzwert ist.

11. Die Methode in Anspruch 9, wobei das Einschalten des Aktuators die Wiederholung der Messung des physikalischen Parameters des Puffers (20B) und den Vergleich des gemessenen physikalischen Parameters umfasst.

12. Die Methode in Anspruch 10, wobei das Ausschalten des Aktuators die Wiederholung der Messung des physikalischen Parameters des Puffers (20B) und den Vergleich des gemessenen physikalischen Parameters umfasst.

## Revendications

1. Une pile à combustible comprenant un empilement de piles à combustible (20A), un actionneur (20C) et un tampon (20B) adapté de façon à stocker du combustible fourni à partir de l'actionneur (20C), comprenant une partie circuit de commande (20D) adaptée de façon à commander un fonctionnement de l'actionneur (20C) en fonction d'une valeur d'un paramètre physique dépendant d'une variation d'une quantité de combustible du tampon,
et **caractérisé en ce que** la partie circuit de commande (20D) est adaptée en outre de façon à commander une quantité de combustible dans le tampon (20B) de sorte que la quantité de combustible dans le tampon lorsque la pile à combustible est dans un état désactivé soit inférieure à la quantité de combustible dans le tampon lorsque la pile à combustible est dans un état activé,
et **en ce que** le tampon est adapté en outre de façon à fournir la totalité de combustible consommé dans l'empilement de piles à combustible à l'empilement de piles à combustible.

2. La pile à combustible selon la Revendication 1, où le paramètre physique est une résistance électrique.

3. La pile à combustible selon la Revendication 1 ou 2, où le tampon (20B) possède une forme quelconque parmi une forme de plaque, une forme de boîte et une forme cylindrique.

4. Un procédé d'exploitation d'une pile à combustible comprenant un empilement de piles à combustible (20A), un actionneur (20C) et un tampon (20B) adapté de façon à stocker du combustible fourni à partir de l'actionneur (20C), le procédé comprenant :
la mesure d'une quantité d'un paramètre physique dépendant d'une variation d'une quantité de combustible du tampon,
la comparaison du paramètre physique mesuré à une valeur de référence, et
l'actionnement de l'actionneur (20C) en fonction d'un résultat de la comparaison,
et **caractérisé par** les opérations suivantes : la définition d'une valeur de la valeur de référence de façon à avoir une valeur lorsque la pile à combustible est dans un état désactivé qui est différente d'une valeur de la valeur de référence lorsque la pile à combustible est dans un état activé, de sorte que la quantité de combustible conservée dans le tampon lorsque la pile à combustible est dans un état désactivé soit inférieure à la quantité de combustible conservée dans le tampon lorsque la pile à combustible est dans un état activé, et
la fourniture de la totalité de combustible consommé dans l'empilement de piles à combustible à l'empilement de piles à combustible.

5. Le procédé selon la Revendication 4, où la comparaison du paramètre physique mesuré est exécutée au moyen d'une partie circuit de commande (20D).

6. Le procédé selon la Revendication 4 ou 5, où l'actionnement de l'actionneur (20C) est commandé au moyen d'une partie circuit de commande (20D).

7. Le procédé selon l'une quelconque des Revendications 4 à 6, où le paramètre physique prédéterminé est un paramètre quelconque parmi résistance électrique et courant électrique.

8. Le procédé selon l'une quelconque des Revendications 4 à 7, où la valeur de référence est un paramètre physique mesuré du tampon (20B) lorsque le tampon (20B) est rempli avec une quantité prédéterminée de combustible.

9. Le procédé selon l'une quelconque des Revendications 4 à 8, où l'actionnement de l'actionneur (20C) comprend la mise en route de l'actionneur pendant une durée donnée lorsque le paramètre physique est supérieur à la valeur de référence.

10. Le procédé selon l'une quelconque des Revendications 4 à 9, où l'actionnement de l'actionneur (20C) comprend l'arrêt de l'actionneur pendant une durée donnée lorsque le paramètre physique n'est pas supérieur à la valeur de référence.

11. Le procédé selon la Revendication 9, où la mise en route de l'actionneur comprend la répétition de la mesure du paramètre physique du tampon (20B) et la comparaison du paramètre physique mesuré.

12. Le procédé selon la Revendication 10, où l'arrêt de l'actionneur comprend la répétition de la mesure du paramètre physique du tampon (20B) et la comparaison du paramètre physique mesuré.
